# EUROPÄISCHE PATENTSCHRIFT

(11) **EP 0 477 510 B1**
(45) Veröffentlichungstag und Bekanntmachung des Hinweises auf die Patenterteilung: **22.02.1995**
(21) Anmeldenummer: 91113272.8
(22) Anmeldetag: 07.08.1991
(51) Int. Cl.: F16H 61/42

(54) **Steuer- und Regelvorrichtung für ein hydrostatisches Getriebe**
Control system for a hydrostatic transmission
Dispositif de commande et de régulation pour une transmission hydrostatique

(30) Priorität: 18.09.1990 DE 4029548
(43) Veröffentlichungstag der Anmeldung: 01.04.1992
(73) Patentinhaber: BRUENINGHAUS HYDROMATIK GMBH, 89275 Elchingen (DE)
(72) Erfinder: Schniederjan, Reinhold, W-Neu-Ulm 8 (DE); Wagenseil, Ludwig, W-7917 Vöhringen (DE)
(74) Vertreter: Körber, Wolfhart, Dr.rer.nat.

(56) Entgegenhaltungen:
- DE-A- 3 404 190
- DE-A- 3 539 220
- GB-A- 1 586 634
- SOVIET INVENTIONS ILLUSTRA- TED, P,Q Sektion, Woche 9019, 20. June 1990 DERWENT PUBLICATIONS LTD., London Q64

## Beschreibung

Die Erfindung betrifft eine Steuer- und Regelvorrichtung für ein hydrostatisches Getriebe nach dem Oberbegriff des Patentanspruches 1.

Aus der DE-C-3 539 220 ist eine derartige Steuer- und Regelvorrichtung bekannt, deren Schalteinrichtung über eine einzige Arbeitsdrucksignalleitung und ein Wechselventil an beide Arbeitsleitungen angeschlossen ist, drei Schaltstellungen, davon eine sperrende Mittelstellung, aufweist und bei Überschreiten einer Leerlaufdrehzahl des Antriebsmotors über ein Fahrtrichtungsventil zum Einschalten des Leerlaufs oder des Vorwärts- oder Rückwärtsganges mit dem Steuersignal angesteuert wird, wenn einer der beiden Gänge eingeschaltet ist. Durch diese Ansteuerung wird die Schalteinrichtung entsprechend dem eingeschalteten Gang in eine der beiden äußeren Schaltstellungen geschaltet, um das Förderrichtungsventil auf der entsprechenden Seite mit dem Arbeitsdrucksignal zu beaufschlagen und somit die Hydropumpe über die Verstelleinrichtung in die entsprechende Förderrichtung auszuschwenken.

Bei Wegfall des Steuersignals, d.h. bei Leerlaufdrehzahl oder bei eingeschaltetem Leerlauf, entfällt die Ansteuerung der Schalteinrichtung mit dem Steuersignal, die daraufhin durch Federdruck in die sperrende Mittelstellung geschaltet wird, in der sie die Beaufschlagung des Förderrichtungsventils mit dem Arbeitsdrucksignal unterbricht. Federdruck verstellt das folglich weder vom Steuersignal angesteuerte noch vom Arbeitsdrucksignal beaufschlagte Förderrichtungsventil und damit über die Verstelleinrichtung die Hydropumpe in die Nullstellung. Diese übernimmt nun nach Verzögerung des Hydromotors bis zum Stillstand dessen Abstützung gegen die Wirkung der Last, die sich unter dem Einfluß der Erdbeschleunigung bewegen will. In der Praxis hat sich jedoch gezeigt, daß beispielsweise die unvermeidbar auftretenden Leckverluste dafür verantwortlich sind, daß nach kürzerer Zeit Druckverluste in der den Hochdruck führenden Arbeitsleitung auftreten, so daß der Hydromotor keine ausreichende Abstützung an der Hydropumpe findet und sich folglich ohne Einsatz der mechanischen Bremse zu drehen beginnt; auf diese Weise kann die Last nicht im Stillstand gehalten werden. Dieser Nachteil tritt auch infolge anderer Faktoren auf, wie beispielsweise infolge von Verstellspiel, das eine exakte Einstellung der Hydropumpe auf Null-Fördervolumen verhindert. Somit ist unter praktischen Einsatzbedingungen ohne Einsatz der mechanischen Bremsekeine sichere und ausreichende Abstützung der Last gewährleistet. Ferner ist es nicht möglich, die Last unter Beibehaltung der Leerlaufstellung gegen die Wirkung der Erdbeschleunigung zu beschleunigen. Dieser Vorgang, hier "Rangieren", genannt ist insbesondere für beispielsweise Einparkvorgänge bei Verwendung des Getriebes in Fahrzeugen oder für Lagekorrekturen der Last bei Einsatz des Getriebes in Hebevorrichtungen wichtig.

Es ist Aufgabe der Erfindung, ein hydrostatisches Getriebe der eingangs genannten Art so weiterzubilden, daß auch bei unterbrochener Ansteuerung des Förderrichtungsventils mit dem Steuersignal eine bis zum Stillstand verzögerte Last sowohl rangiert als auch unter praktischen Einsatzbedingungen sicher im Stillstand gehalten werden kann.

Diese Aufgabe wird erfindungsgemäß durch die kennzeichnenden Merkmale des Patentanspruches 1 gelöst.

Die erfindungsgemäße Schalteinrichtung erlaubt es, bei Wegfall des Steuersignals, also beispielsweise bei Leerlaufdrehzahl des Antriebsmotors, das am Förderrichtungsventil anstehende Arbeitsdrucksignal auf die jeweils andere Seite des Förderrichtungsventils umzuschalten und auf diese Weise die Hydropumpe in die zum Gegenhalten des Hochdrucks in der jeweils hochdruckführenden Arbeitsleitung erforderliche Förderrichtung, d.h. sozusagen in den Rückwärtsgang bei aus dem Schubbetrieb und in den Vorwärtsgang bei aus dem Lastbetrieb verzögerter Last, auszuschwenken. Somit kann auch an steileren Gefälle- oder Steigungsstrecken die Last mit im Leerlauf drehenden Antriebsmotor sicher im Stillstand gehalten werden. Zum Rangieren der Last, d.h. zum Rückwärtsfahren bei aus dem Schubbetrieb und zum Vorwärtsfahren bei aus dem Lastbetrieb verzögerter Last, ist lediglich eine Erhöhung der Drehzahl des Antriebsmotors, jedoch keine Ansteuerung des Förderrichtungsventils mit dem Steuersignal erforderlich.

Um abruptes Verzögern der Last zu vermeiden, schaltet die Schalteinrichtung vorzugsweise erst bei Stillstand des Hydromotors um. Zu diesem Zweck kann ein Schaltsignalgeber zur Erfassung der Drehzahl des Hydromotors und Erzeugung eines die Schalteinrichtung zwecks Umschalten beaufschlagenden Schaltsignals bei Stillstand des Hydromotors vorgesehen sein.

Vorteilhafterweise ist der Schaltsignalgeber an einem Förderrichtungsschalter angeschlossen, der auf zwei den Förderrichtungen der Hydrompumpe entsprechende Schaltstellungen (Vorwärtsgang und Rückwärtsgang) sowie auf Leerlauf einstellbar ist und bei Einstellung des Leerlaufs das Schaltsignal vom Schaltsignalgeber zur Schalteinrichtung weiterleitet.

Dabei kann ein Steuersignalgeber zum Messen der Drehzahl des Antriebsmotors und Erzeugung des Steuersignals an den Förderrichtungsschalter angeschossen sein, der in einer seiner beiden Schaltstellungen das Steuersignal vom Steuersignalgeber zur jeweils zugeordneten Seite des Förderrichtungsventils weiterleitet.

Gemäß einer Weiterbildung der Erfindung ist der Förderrichtungsschalter einer elektrischen Steuereinheit zugeordnet, wobei sowohl das Steuersignal als auch das Schaltsignal elektrische Signale sind.

Vorzugsweise ist das Förderrichtungsventil an beiden Seiten durch je einen vom elektrischen Steuersignal ansteuerbaren Proportionalmagneten betätigbar.

Gemäß einer weiteren Ausgestaltung der Erfindung weist das Förderrichtungsventil an beiden Seiten je einen Steuerraum auf, der zwecks Beaufschlagung mit dem in der jeweils hochdruckführenden Arbeitsleitung herrschenden Arbeitsdruck als Arbeitsdrucksignal über die Schalteinrichtung mit je einer der Arbeitsleitungen verbindbar ist.

Vorzugsweise ist die Schalteinrichtung als 4/2-Wegeventil ausgebildet, welches ein Schaltventil oder ein stetig verstellbares Ventil sein kann.

Das Förderrichtungsventil ist vorteilhafterweise als drosselndes 4/3-Wegeventil ausgebildet und durch Federzentrierung in einer sperrenden Ruhestellung gehalten.

Die Verstelleinrichtung kann als Hydrozylinder mit einem federzentrierten Gleichgangkolben ausgebildet sein. Dabei ist eine Ausgestaltung günstig, gemäß welcher das Gehäuse des Förderrichtungsventils zwecks Rückstellung in die sperrende Ruhestellung mit der Kolbenstange des Gleichgangkolbens des Hydrozylinders verbunden ist.

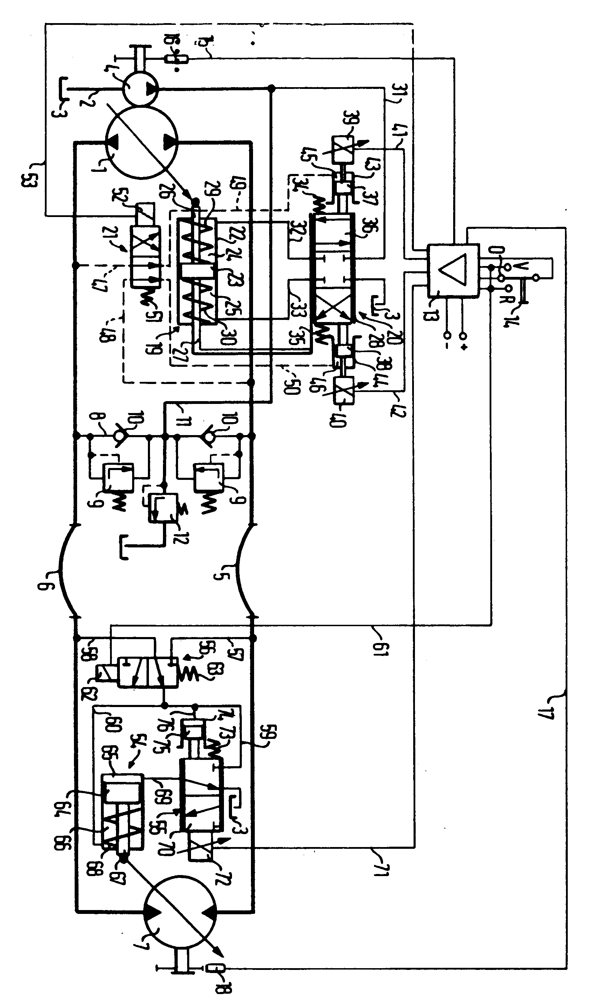

Nachstehend ist die Erfindung anhand eines bevorzugten Ausführungsbeispiels unter Bezugnahme auf die einzige Figur näher beschrieben.

Die Figur zeigt einen Schaltplan eines hydrostatischen Getriebes als Fahrantrieb für beispielsweise einen Radlader. Dieses hydrostatische Getriebe besteht aus einer von einem nicht gezeigten Antriebsmotor, beispielsweise einem Dieselmotor, angetriebene, in zwei Förderrichtungen fördernde hydrostatische Verstellpumpe 1, wie z.B. eine Axialkolbenpumpe in Schrägscheibenbauweise, einer mit dieser mechanisch verbundenen, über eine Leitung 2 an den Tank 3 angeschlossenen hydrostatischen Hilfs- oder Konstantpumpe 4, einen über zwei Arbeitsleitungen 5,6 mit der Verstellpumpe 1 verbundenen hydrostatischen Verstellmotor 7, wie beispielsweise einen Axialkolbenmotor in Schrägachsenbauweise, und eine noch zu beschreibende Steuer- und Regelvorrichtung für das hydrostatische Getriebe.

Beide Arbeitsleitungen 5,6 sind über eine Leitung 8 miteinander verbunden, an die zwei Druckbegrenzungsventile 9 jeweils im Nebenschluß, je ein Rückschlagventil 10 in der Leitung 8 umgehend, angeschlossen sind. Da beide Rückschlagventile 10 in entgegengesetzten Richtungen sperren, begrenzen die Druckbegrenzungsventile 9 den Arbeitsdruck in der jeweils den Hochdruck führenden Arbeitsleitung 5 bzw. 6.

Die Konstantpumpe 4 dient als Speise- und Steuerpumpe. Sie ist über eine Speiseleitung 11 an die Leitung 8 angeschlossen, in die sie zwischen den beiden Rückschlagventilen 10 einmündet. Zur Absicherung des maximalen Speisedrucks ist ein zum Tank 3 hin öffnendes Druckbegrenzungsventil 12 an die Speiseleitung 11 angeschlossen.

Die Steuer- und Regelvorrichtung umfaßt eine erste, der Verstellpumpe 1 zugeordnete hydraulische Anordnung, eine zweite, dem Verstellmotor 7 zugeordnete hydraulische Anordnung sowie eine beiden Anordnungen gemeinsame elektrische Steuereinheit 13 mit einem Förder- bzw. Fahrtrichtungsschalter 14, der manuell auf 3 Schaltstellungen, nämlich eine Leerlaufstellung "Null", einen Vorwärtsgang "V" und einen Rückwärtsgang "R" einstellbar ist. Die Steuereinheit 13 ist über eine Steuersignalleitung 15 mit einem auf der Eingangswelle der Verstellpumpe 1 angeordneten Steuersignalgeber 16 und über eine Schaltsignalleitung 17 mit einem auf der Ausgangswelle des Verstellmotors 7 angeordneten Schaltsignalgeber 18 verbunden. Der Steuersignalgeber 16 erzeugt ein der Drehzahl des Antriebsmotors proportionales Steuersignal. Der Schaltsignalgeber 18 erzeugt ein der Drehzahl des Verstellmotors 7 proportionales Schaltsignal.

Die erste hydraulische Anordnung umfaßt eine mit einem Stelldruck beaufschlagbare Verstelleinrichtung 19 zum Verstellen des Fördervolumens und der Förderrichtung der Verstellpumpe 1, ein Förder- bzw. Fahrtrichtungsventil 20 zur Steuerung und Regelung der Stelldruckbeaufschlagung der Verstelleinrichtung 19 und eine Schalteinrichtung in Form eines nichtdrosselnden 4/2-Wege- oder Schaltventils 21.

Die Verstelleinrichtung 19 besteht aus einem doppelt wirkenden Hydrozylinder 22, in welchem ein Gleichgangkolben 23 zwei Druckräume 24,25 abgrenzt, über eine Hälfte 26 einer beidseitigen Kolbenstange 26,27 mit der z.B. Schrägscheibe der Verstellpumpe 1 und mit der anderen Hälfte 27 mit dem Gehäuse 28 des Fahrtrichtungsventils 20 gekoppelt ist. Der Gleichgangkolben 23 ist mittels je einer auf den Kolbenstangenhälften 26,27 angeordneten Zentrierfeder 29 bzw. 30 in beiden Druckräumen 24 bzw. 25 federzentriert.

Das Fahrtrichtungventil 20 ist ein federzentriertes drosselndes 4/3-Wegeventil mit einem Anschluß zum Tank 3, einem weiteren, über eine Stelldruckleitung 31 mit der Speiseleitung 11 verbundenen Anschluß und zwei verbleibenden Anschlüssen, die über je eine Stelldruckzweigleitung 32,33 mit den Druckräumen 24 bzw. 25 der Verstelleinrichtung 19 verbunden sind.

In seiner in der Zeichnung dargestellten (federzentrierten) Mittelstellung sind sämtliche vier Anschlüsse des Fahrtrichtungsventils 20 gesperrt, so daß der Gleichgangkolben 23 der Verstelleinrichtung 19 ebenfalls seine (federzentrierte) Mittelstellung und damit die Verstellpumpe 1 ihre Nullstellung mit Null-Fördervolumen einnimmt.

In der in der Zeichnung rechten Endstellung des Fahrtrichtungsventils 20 ist der linke Druckraum 24 der Verstelleinrichtung 19 vollständig mit der Stelldruckleitung 31 verbunden, während der rechte Druckraum 25 zum Tank 3 hin entlastet ist. Dementsprechend ist die Verstellpumpe 1 in die dem Vorwärtsgang entsprechende Förder- bzw. Fahrtrichtung ausgeschwenkt. In der in der Zeichnung linken Endstellung des Fahrtrichtungsventils 20 sind die Anschlüsse vertauscht, so daß die Verstellpumpe 1 in die dem Rückwärtsgang entsprechende Förder- bzw. Fahrtrichtung ausgeschwenkt ist.

Das beidseitig mittels je einer Zentrierfeder 34,35 federzentrierte Fahrtrichtungsventil 20 ist ebenfalls beidseitig sowohl hydraulisch durch Beaufschlagung mit einem Arbeitsdrucksignal als auch elektrisch durch Ansteuerung mit dem Steuersignal betätigbar. Zu diesem Zweck ist sein Steuerschieber 36 beidseitig mit je einem Ansatz versehen, der über je einen Zwischenkolben 37,38 mit je einer Betätigungsstange je eines herkömmlichen Proportionalmagneten 39,40 gekoppelt ist. Beide Proportionalmagneten 39,40 sind über eine erste bzw. zweite weiterführende Steuersignalleitung 41,42 an die Steuereinheit 13 angeschlossen. Beide Zwischenkolben 37,38 begrenzen innerhalb je eines Zylinders 43,44 mit je einer dem Steuerschieber 36 abgewandten Meßfläche je einen Steuerraum 45 bzw. 46. Jeder der beiden Steuerräume 45,46 ist über das Schaltventil 21 an jede der beiden Arbeitsleitungen 5,6 anschließbar. Zu diesem Zweck ist jede Arbeitsleitung 5,6 über je eine Arbeitsdrucksignalleitung 47 bzw. 48 mit zwei der vier Anschlüsse des Schaltventils 21 verbunden, dessen verbleibende zwei Anschlüsse über je eine weiterführende Arbeitsdrucksignalleitung 49,50 zu den beiden Steuerräumen 45,46 führen.

Eine Druckfeder 51 hält das Schaltventil 21 in der in der Zeichnung dargestellten Nullstellung, in der die in der Zeichnung obere Arbeitsleitung 5 an den rechten Steuerraum 44 und die in der Zeichnung untere Arbeitsleitung 6 an den linken Steuerraum 43 des Fahrtrichtungsventils 20 angeschlossen ist. Diese Anschlüsse sind in der Schaltstellung des Schaltventils 21 vertauscht. Zur Betätigung desselben dient ein herkömmlicher Proportionalmagnet 52, der über eine weiterführende Schaltsignalleitung 53 mit der Steuereinheit 13 verbunden ist.

Die zweite hydraulische Anordnung umfaßt eine mit dem Arbeitsdruck in der jeweils den Hochdruck führenden Arbeitsleitung 5,6 beaufschlagbaren Stellzylinder 54 zum Verstellen des Schluckvolumens des Verstellmotors 7, ein Vorsteuerventil 55 zum Steuern und Regeln der Druckbeaufschlagung des Stellzylinders 54 und ein nichtdrosselndes 3/2-Wegeventil 56 mit zwei über je eine Anschlußleitung 57,58 mit den Arbeitsleitungen 5 bzw. 6 verbundenen Anschlüssen und einem über eine erste sowie eine zweite weiterführende Anschlußleitung 59,60 mit dem Stellzylinder 54 bzw. dem Vorsteuerventil 55 verbundenen Anschluß. In der in der Zeichnung dargestellten Nullstellung ist der Anschluß zur unteren Arbeitsleitung 6 geöffnet, während der Anschluß zur oberen Arbeitsleitung 5 gesperrt ist. In der Schaltstellung ist letzterer Anschluß geöffnet und ersterer gesperrt. Zur Betätigung des 3/2-Wegeventils 56 von der Null- in die Schaltstellung ist ein über eine elektrische Signalleitung 61 an die Steuereinheit 13 angeschlossener herkömmlicher Proportionalmagnet 62 vorgesehen. Eine Druckfeder 63 bewirkt die Rückführung des 3/2-Wegeventils 56 in die Nullstellung.

Der Stellzylinder 54 ist ein einfach wirkender Zylinder, in welchem ein Kolben 64 zwei Druckräume 65,66 abgrenzt und über seine den Druckraum 66 durchsetzende einseitige Kolbenstange 67 mit beispielsweise der Zylindertrommel des Verstellmotors 7 gekoppelt ist. Letzterer Druckraum 66 ist an die zweite weiterführende Anschlußleitung 60 angeschlossen. Eine im rechten Druckraum 66 auf der Kolbenstange 67 angeordnete Druckfeder 68 beaufschlagt den Kolben 64 und damit den Verstellmotor 7 in Richtung maximales Schluckvolumen.

Das Vorsteuerventil 55 ist ein drosselndes 3/2-Wegeventil mit einem Anschluß zum Tank 3, einem mit der ersten weiterführenden Anschlußleitung 59 verbundenen Anschluß und einem über eine Verbindungsleitung 69 zum linken Druckraum 65 des Stellzylinders 54 führenden Anschluß. In der in der Zeichnung dargestellten Nullstellung ist der Anschluß des Vorsteuerventils 55 zum nichtdrosselnden 3/2-Wegeventils 56 gesperrt und der linke Druckraum 65 des Stellzylinders 54 zum Tank 3 hin entlastet. In der Schaltstellung ist letzterer Druckraum 65 mit der ersten weiterführenden Anschlußleitung 59 verbunden und der Anschluß zum Tank 3 gesperrt. Zur Betätigung des Vorsteuerventils 55 von der Null- in die Schaltstellung ist an der rechten Seite seines Steuerkolbens 70 ein über eine dritte weiterführende Steuersignalleitung 71 an die Steuereinheit 13 angeschlossener herkömmlicher Proportionalmagnet 72 vorgesehen. Die Rückstellung des Vorsteuerventils 55 in die Nullstellung erfolgt bei nicht angesteuertem Proportionalmagneten 72 durch den Druck einer Druckfeder 73 sowie zusätzlich als Druckabschneidung durch hydraulische Beaufschlagung der dem Vorsteuerventil 55 abgewandten Meßfläche eines in einem Zylinder 74 angeordneten Kolbens 75 über eine mit der ersten weiterführenden Anschlußleitung 59 verbunden Stichleitung 76.

Die Funktion des mit der erfindungsgemäßen Steuer- und Regelvorrichtung ausgerüsteten hydrostatischen Getriebes ist wie folgt:
Während der Fahrt des Radladers wird vom Steuersignalgeber 15 und von der Konstantpumpe 4 ein elektrisches Steuersignal bzw. ein hydrostatisches Stelldrucksignal erzeugt. Beide Signale sind der Drehzahl des Antriebsmotors proportional. Die Steuersignalleitung 15 ist in der elektrischen Steuereinheit 13 entsprechend der mit dem Fahrtrichtungsschaltung 13 gewählten Fahrtrichtung mit der ersten (linken) oder zweiten (rechten) weiterführenden Steuersignalleitung 41 oder 42 verbunden, so daß der linke oder rechte Proportionalmagnet 39 oder 40 durch das Steuersignal angesteuert ist und entsprechend dessen Stärke den Steuerschieber 36 des Fahrtrichtungsventils 20 in Richtung rechte oder linke Endstellung beaufschlagt. Mit zunehmender Drehzahl des Antriebsmotors und damit stärkerwerdendem Steuersignal wird beispielsweise bei der Vorwärtsfahrt der linke Proportionalmagnet 39 durch Erregen seiner Spule stärker angesteuert, so daß der Steuerschieber 36 des Fahrtrichtungsventils 20 in entsprechendem Maße nach rechts verschoben und die Stelldruckleitung 31 mit dem linken Druckraum 24 der Verstelleinrichtung 18 verbunden wird. Der entsprechend der Höhe und Drehzahl des Antriebsmotors höhere Stelldruck verschiebt nun den Gleichgangkolben 23 der Verstelleinrichtung 19 nach rechts und schwenkt dadurch die Verstellpumpe 1 in der dem Vorwärtsgang entsprechenden Förderrichtung weiter aus. Dabei nimmt der Gleichgangkolben 23 das Gehäuse 28 des Fahrtrichtungsventils 20 in gleicher Richtung solange mit, bis letzteres die Nullstellung erreicht hat.

Sobald die Verstellpumpe 1 auf maximales Fördervolumen ausgeschwenkt ist, wird bei weiterer Erhöhung der Drehzahl des Antriebsmotors das entsprechend stärkere Steuersignal von Steuersignalgeber 16 in der Steuereinheit 13 von der ersten weiterführenden Steuersignalleitung 41 auf die dritte weiterführende Steuersignalleitung 71 umgeschaltet. Da zugleich mit der Einstellung des Fahrtrichtungsschalters 14 auf Vorwärtsfahrt die Steuereinheit 13 das 3/2-Wegeventil 56 durch Ansteuern seines Proportionalmagneten 62 über die Signalleitung 61 in die Schaltstellung überführt (bei Rückwärtsfahrt verbleibt das 3/2-Wegeventil 56 wegen des Wechsels der Hochdruckseite in seiner Ruhestellung), wird die den Hochdruck führende obere Arbeitsleitung 5 mit dem linken Druckraum 65 des Stellzylinders 54 verbunden und auf diese Weise der Verstellmotor 7 in Richtung kleineres Schluckvolumen zurückgeschwenkt. Das hydrostatische Getriebe befindet sich im Primärverstellungsbereich bei Änderung seines Übersetzungsverhältnis nur durch die Verstellpumpe 1 und im Sekundärverstellungsbereich, wenn seine Übersetzung lediglich durch Verstellen des Verstellmotors 7 geändert wird.

Bei Erreichen der maximalen Drehzahl des Antriebsmotors ist der Verstellmotor 7 auf minimales Schluckvolumen und damit das Übersetzungverhältnis des hydrostatischen Getriebes auf den größten Wert eingestellt. Die umgekehrte Reihenfolge der vorbeschriebenen Schritte führt zu einer Verringerung des Übersetzungsverhältnisses.

Wenn der Hochdruck infolge übermäßiger Belastung des Verstellmotors 7 die Meßfläche des Kolbens 75 mit einer die Stellkraft des Proportionalmagneten 73 übersteigenden Druckkraft beaufschlagt, wird der Steuerkolben 70 des Vorsteuerventils 55 nach rechts verschoben und über den Kolben 64 des Stellzylinders 54 der Verstellmotor 7 solange in Richtung maximales Schluckvolumen ausgeschwenkt, bis Kraftgleichgewicht am Steuerkolben 70 herrscht.

Diese Druckabschneidung- und regelung erfolgt in gleicher Weise durch Zurückschwenken der Verstellpumpe 1 in Richtung Null-Fördervolumen, da während der Vorwärts- und Rückwärtsfahrt das Schaltventil 21 in seiner Nullstellung verbleibt und jeweils denjenigen Steuerraum 46 (bei Vorwärtsfahrt) bzw. 45 (bei Rückwärtsfahrt) beaufschlagt, der dem jeweils angesteuerten Proportionalmagneten 39 (bei Vorwärtsfahrt) bzw. 40 (bei Rückwärtsfahrt) gegenüberliegt.

Gleichzeitig verhindert das während der Fahrt in seiner Nullstellung verbleibende Schaltventil 21 bei Zurücknahme der Drehzahl des Antriebsmotors, d.h. bei Übergang vom Lastbetrieb zum Schubbetrieb, ein Zurückschwenken der Verstellpumpe und damit eine insbesondere bei Leerlaufeinstellung auftretende abrupte Motorbremsung. Mit dem bei Übergang in den Schubbetrieb auftretenden Wechsel in der Hochdruckseite von der Arbeitsleitung 5 zur Arbeitsleitung 6 (bei Vorwärtsfahrt) wechselt auch die hydraulische Beaufschlagung des Steuerschiebers 36 des Fahrtrichtungsventils 20 vom Steuerraum 46 (bei Vorwärtsfahrt) zum Steuerraum 45. Auf diese Weise wird die durch die Zurücknahme der Drehzahl des Antriebsmotors und damit Verringerung des Steuersignals verminderte Beaufschlagung des Steuerschiebers 36 des Fahrtrichtungsventils 20 durch eine gleichsinnige und verstärkte hydraulische Beaufschlagung im wesentlichen ausgeglichen und somit die während des vorherigen Lastbetriebes eingenommene Stellung des Steuerschiebers 36 und damit der Verstellpumpe 1 in etwa aufrecht erhalten.

Als weitere Maßnahme zur Verhinderung der abrupten Motorbremsung kann das Schluckvolumen des Verstellmotors 7 durch Wegnahme des den Proportionalmagneten 62 des 3/2-Wegeventils 56 ansteuernden elektrischen Signals und Ansteuerung des Vorsteuerventils 55 mit dem Steuersignal im Fall der Sekundärverstellung auf kleinerem Wert gehalten und im Fall der Primärverstellung auf kleineren Wert verstellt werden.

Der Verstellmotor 7 kann jedoch auch zur stärkeren Ausnutzung der Bremsleistung des Antriebsmotors durch Wegnahme des den Proportionalmagneten 72 des Vorsteuerventils 55 ansteuernden Steuersignals in Richtung größeren Schluckvolumens ausgeschwenkt werden.

Wenn der mit den vorbeschriebenen Maßnahmen, ggf. unter Zuhilfenahme der mechanischen Bremse, verzögerte Radlader zum Stillstand gekommen ist, wird durch Einstellen des Fahrtrichtungsschalter 14 auf den Leerlauf "Null" das den Stillstand des Verstellmotors 7 anzeigende Schaltsignal vom Schaltsignalgeber 18 über die Schaltsignalleitung 17, die elektrische Steuereinheit 13 und die weiterführende Schaltsignalleitung 53 zum Proportionalmagneten 52 des Schaltventils 21 weitergeleitet und letzteres dadurch in die Schaltstellung gebracht. Auf diese Weise wird mittels des Arbeitsdrucks in der jeweils den Hochdruck führenden Arbeitsleitung 5 bzw. 6 das Fahrtrichtungsventil 20 und damit die Verstellpumpe 1 in diejenige Fahrt- bzw. Förderrichtung ausgeschwenkt, die zum Gegenhalten des Hochdrucks in der jeweiligen Arbeitsleitung erforderlich ist.

Wenn beispielsweise der Radlader aus dem Lastbetrieb, beispielsweise beim Befahren einer Steigungsstrecke, bis zum Stillstand verzögert worden ist, verbindet das in die Schaltstellung gebrachte Schaltventil 21 die weiterhin dem Hochdruck führende, während der Fahrt mit dem rechten Steuerraum 46 verbundene Arbeitsleitung 5 mit dem linken Steuerraum 45 des Fahrtrichtungsventils 20. Der Hochdruck in der Arbeitsleitung 5 verschiebt nun den Steuerschieber 36 des Fahrtrichtungsventils 20 in Richtung der rechten Endstellung. Die auf diese Weise in die dem Vorwärtsgang entsprechende Förderrichtung ausgeschwenkte Verstellpumpe 1 verhindert eine Drehung des Verstellmotors 7, den die bergabwärts wirkende Gewichtskraft des Radladers nach rückwärts drehen will. Auf diese Weise wird der Radlader ohne mechanische Bremse unter Beibehaltung der Leerlaufstellung des Fahrtrichtungsschalters 14 sowie der Leerlaufdrehzahl des Antriebsmotors auch an steileren Steigungsstrecken sicher im Stillstand gehalten. Durch Erhöhung der Drehzahl des Antriebsmotors wird der Radlader gegen die Wirkung der Erdbeschleunigung, d.h. bergaufwärts, erneut in Bewegung versetzt.

Man erkennt, daß die Funktion des Schaltventils 21 darin besteht, den bei Erreichen des Stillstandes an einer Steigung nicht stattfindenden Wechsel der Hochdruckseite in den Arbeitsleitungen 5,6 sozusagen stellvertretend durch entsprechenden Wechsel der hydraulischen Beaufschlagung des Fahrtrichtungsventils 20 vorzunehmen.

In gleicher Weise findet kein Wechsel der Hochdruckseite statt, wenn der aus dem Schubbetrieb, beispielsweise bei Befahren einer Gefällestrecke, verzögerte Radlader zum Stillstand kommt. In diesem Fall wird mit dem Umschalten des Schaltventils 21 von der Null- in die Schaltstellung die hydraulische Beaufschlagung des Fahrtrichtungsventils 20 mit dem in der Arbeitsleitung 6 herrschenden Hochdruck gewechselt und zwar vom Steuerraum 45 zum Steuerraum 46. Der Hochdruck verschiebt den Steuerschieber 36 des Fahrtrichtungsventils 20 in Richtung linke Endstellung, so daß die Verstellpumpe 1 in die dem Rückwärtsgang entsprechende Förderrichtung ausgeschwenkt wird. Damit wird der Radlader in gleicher Weise wie im Falle des Stillstandes an einer Steigung ohne mechanische Bremse unter Beibehaltung der Leerlaufstellung des Fahrtrichtungsschalters 14 und ohne Erhöhung der Drehzahl des Antriebsmotors sicher im Stillstand gehalten. Sobald die Drehzahl des Antriebsmotors erhöht wird, setzt sich der Radlader gegen die Erdbeschleunigung, d.h. nach rückwärts in Bewegung.

## Patentansprüche

1. Steuer- und Regelvorrichtung für ein hydrostatisches Getriebe, das eine durch einen Antriebsmotor antreibbare reversierbare Hydropumpe (1), wenigstens einen über zwei Arbeitsleitungen (5, 6) mit der Hydropumpe verbundenen Hydromotor (7) und eine zur Verstellung des Fördervolumens sowie der Förderrichtung der Hydropumpe durch einen Stelldruck beaufschlagbare Verstelleinrichtung (19) umfaßt, mit einem zur Steuerung und Regelung der Stelldruckbeaufschlagung der Verstelleinrichtung vorgesehenen Förderrichtungsventil (20), das mit einem der Drehzahl des Antriebsmotors proportionalen und die Förderrichtung der Hydropumpe vorgebenden Steuersignal in jeweils eine von zwei einander entgegengesetzten Richtungen ansteuerbar und über eine Schalteinrichtung (21) mit einem dem Arbeitsdruck in der jeweils den Hochdruck führenden Arbeitsleitung proportionalen Arbeitsdrucksignal in jeweils eine der beiden einander entgegengesetzten Richtungen beaufschlagbar ist,
**dadurch gekennzeichnet,**
daß die Schalteinrichtung (21) über je eine Arbeitsdrucksignalleitung (47, 48) an die Arbeitsleitungen (6, 5) angeschlossen ist, zwei Schaltstellungen aufweist und bei Wegfall des Steuersignals von der einen in die andere Schaltstellung schaltet, um die Beaufschlagung des Förderrichtungsventils (20) mit dem Arbeitsdrucksignal von der einen in die jeweils entgegengesetzte Richtung umzukehren.

2. Steuer- und Regelvorrichtung nach Anspruch 1,
**dadurch gekennzeichnet,**
daß die Schalteinrichtung (21) erst bei Stillstand des Hydromotors (7) umschaltet.

3. Steuer- und Regelvorrichtung nach Anspruch 2,
**gekennzeichnet durch,**
einen Schaltsignalgeber (18) zur Erfassung der Drehzahl des Hydromotors (7) und Erzeugung eines die Schalteinrichtung (21) zwecks Umschalten beaufschlagenden Schaltsignals bei Stillstand des Hydromotors (7).

4. Steuer- und Regelvorrichtung nach Anspruch 3,
**dadurch gekennzeichnet,**
daß der Schaltsignalgeber (18) an einen Förderrichtungsschalter (14) angeschlossen ist, der auf zwei den Förderrichtungen der Hydropumpe (1) entsprechende Schaltstellungen (Vorwärtsgang "V" und Rückwärtsgang "R") und auf Leerlauf ("0") einstellbar ist und bei Einstellung des Leerlaufs das Schaltsignal von Schaltsignalgeber (18) zur Schalteinrichtung (21) weiterleitet.

5. Steuer- und Regelvorrichtung nach Anspruch 4,
**dadurch gekennzeichnet,**
daß ein Steuersignalgeber (16) zum Messen der Drehzahl des Antriebsmotors und Erzeugung des Steuersignals an den Förderrichtungsschalter (14) angeschlossen ist, der in einer seiner beiden Schaltstellungen (Vorwärtsgang "V" bzw. Rückwärtsgang "R") das Steuersignal vom Steuersignalgeber (16) zur jeweils zugeordneten Seite des Förderrichtungsventils (20) weiterleitet.

6. Steuer- und Regelvorrichtung nach Anspruch 4 oder 5,
**dadurch gekennzeichnet,**
daß der Förderrichtungsschalter (14) einer elektrischen Steuereinheit (13) zugeordnet ist, und daß sowohl das Steuersignal als auch das Schaltsignal elektrische Signale sind.

7. Steuer- und Regelvorrichtung nach Anspruch 6,
**dadurch gekennzeichnet,**
daß das Förderrichtungsventil (20) an beiden Seiten durch je einen vom elektrischen Steuersignal ansteuerbaren Proportionalmagneten (39 bzw. 40) betätigbar ist.

8. Steuer- und Regelvorrichtung nach wenigstens einem der Ansprüche 1 bis 7,
**dadurch gekennzeichnet,**
daß das Förderrichtungsventil (20) an beiden Seiten je einen Steuerraum (45,46) aufweist, der zwecks Beaufschlagung mit dem in der jeweils den Hochdruck führenden Arbeitsleitung (5 bzw. 6) herrschenden Arbeitsdruck als Arbeitsdrucksignal über die Schalteinrichtung (21) mit je einer der Arbeitsleitungen (5 bzw. 6) verbindbar ist.

9. Steuer- und Regelvorrichtung nach Anspruch 8,
**dadurch gekennzeichnet,**
daß die Schalteinrichtung (21) als 4/2-Wegeventil ausgebildet ist.

10. Steuer- und Regelvorrichtung nach Anspruch 9,
**dadurch gekennzeichnet,**
daß das 4/2-Wegeventil als Schaltventil (21) oder als stetig verstellbares Ventil ausgebildet ist.

11. Steuer- und Regelvorrichtung nach wenigstens einem der vorhergehenden Ansprüche,
**dadurch gekennzeichnet,**
daß das Förderrichtungsventil (20) als drosselndes 4/3-Wegeventil ausgebildet und durch Federzentrierung (34,35) in einer sperrenden Ruhestellung erhalten ist.

12. Steuer- und Regelvorrichtung nach wenigstens einem der vorhergehenden Ansprüche,
**dadurch gekennzeichnet,**
daß die Verstelleinrichtung (19) als Hydrozylinder (22) mit einem federzentrierten (29,30) Gleichgangkolben (23) ausgebildet ist.

13. Steuer- und Regelvorrichtung nach Anspruch 12,
**dadurch gekennzeichnet,**
daß zwecks Rückstellung des Förderrichtungsventils (20) in die Ruhestellung sein Gehäuse (28) mit der Kolbenstange (27) des Gleichgangkolbens (23) verbunden ist.

## Claims

1. Control and regulating device for a hydrostatic transmission comprising a reversible hydraulic pump (1) that can be driven by a driving motor, at least one hydraulic motor (7) connected via two working lines (5, 6) to the hydraulic pump, and an adjusting device (19) that can be acted on by an adjusting pressure for adjusting the displacement volume and the direction of displacement of the hydraulic pump, together with a displacement-direction valve (20) provided for controlling and regulating the action of the adjusting pressure on the adjusting device, which valve can be set for one of two opposite directions by a control signal that is proportional to the speed of rotation of the driving motor and determines the direction of displacement of the hydraulic pump, and that can be acted on in one of the two opposite directions, via a switching device (21), by a working pressure signal that is proportional to the working pressure in the working line then carrying the high pressure,
characterised in that,
the switching device (21) is connected to the working lines (5, 6) by respective working pressure lines (47, 48), has two switching positions and, in the absence of the control signal, switches from one switching position to the other in order to reverse the action of the working pressure signal on the displacement-direction valve (20) from one direction to the opposite direction.

2. Control and regulating device according to claim 1,
characterized in that,
the switching device (21) does not switch until the hydraulic motor (7) has come to a standstill.

3. Control and regulating device according to claim 2,
characterised by,
a switching signal transmitter (18) for detecting the speed of rotation of the hydraulic motor (7) and for generating a switching signal that acts on the switching device (21) to effect switching when the hydraulic motor (7) is at a standstill.

4. Control and regulating device according to claim 3,
characterised in that,
the switching signal transmitter (18) is connected to a displacement-direction switch (14) that can be set to two switching positions (forward gear "F" and reverse gear "R") corresponding to the directions of displacement of the hydraulic pump (1) and to neutral ("O") and, when set to neutral, delivers the switching signal from switching signal transmitter (18) to the switching device (21).

5. Control and regulating device according to claim 4,
characterized in that,
for the purpose of measuring the speed of rotation of the driving motor and for generating the control signal, a control signal transmitter (16) is connected to the displacement-direction switch (14), which in one of its two switching positions (forward gear "F" or reverse gear "R") delivers the control signal from the control signal transmitter (16) to the respective associated side of the displacement-direction valve (20).

6. Control and regulating device according to claim 4 or 5,
characterised in that,
an electrical control unit (13) is associated with the displacement-direction switch (14), and in that both the control signal and the switching signal are electrical signals.

7. Control and regulating device according to claim 6,
characterised in that,
the displacement-direction valve (20) can be operated on both sides by respective proportional magnets (39 or 40) that can each be actuated by the electrical control signal.

8. Control and regulating device according to one of claims 1 to 7,
characterised in that,
the displacement-direction valve (20) has respective control chambers (45, 46) on both sides that can be connected via the switching device (21) to respective working lines (5 or 6) so as to be acted on by the working pressure prevailing in the working line (5 or 6) then carrying the high pressure, as working pressure signal.

9. Control and regulating device according to claim 8,
characterised in that,
the switching device (21) is formed as a 4/2 way valve.

10. Control and regulating device according to claim 9,
characterised in that,
the 4/2 way valve is formed as a pilot valve (21) or as a continuously adjustable valve.

11. Control and regulating device according to any preceding claim,
characterised in that,
the displacement-direction valve (20) is formed as a 4/3 way throttling valve and is held in a blocking rest position by spring-centering (34, 35).

12. Control and regulating device according to any preceding claim,
characterised in that,
the adjusting device (19) is formed as a hydraulic cylinder (22) having a spring-centred (29, 30) synchronising piston (23).

13. Control and regulating device according to claim 12,
characterised in that,
for the purpose of returning the displacement-direction valve (20) to the rest position its housing (28) is connected to the piston rod (27) of the synchronising piston (23).

## Revendications

1. Dispositif de commande et de réglage d'une boîte de vitesses hydrostatique, qui comporte une pompe hydraulique (1) réversible, entraînée par un moteur d'entraînement, au moins un moteur hydraulique (7) relié par deux conduites de travail (5, 6) à la pompe hydraulique et un dispositif de réglage (19) recevant une pression de réglage, pour le réglage du débit ainsi que du sens de circulation de la pompe hydraulique, avec une vanne de sens de circulation (20) prévue pour la commande et le réglage de l'alimentation en pression de réglage du dispositif de réglage, laquelle peut être commandée, dans un de deux sens opposés l'un à l'autre avec un signal de commande proportionnel à la vitesse de rotation du moteur d'entraînement et imposant le sens de circulation de la pompe hydraulique et peut être alimentée, par un dispositif de commutation (21), dans l'un des deux sens opposés l'un à l'autre, avec un signal de pression de travail proportionnel à la pression de travail dans la conduite de travail acheminant la haute pression, caractérisé en ce que le dispositif de commutation (21) est raccordé, par une ligne de signal de pression de travail (47, 48), aux conduites de travail (6, 5), en ce qu'il comprend deux positions de commutation et en cas de suppression du signal de commande commute d'une position de commutation dans l'autre, afin d'inverser l'alimentation de la vanne de sens de circulation (20) avec le signal de pression de travail, d'un sens dans l'autre sens opposé.

2. Dispositif de commande et de réglage selon la revendication 1, caractérisé en ce que le dispositif de commutation (21) ne commute que lorsque le moteur hydraulique (7) est à l'arrêt.

3. Dispositif de commande et de réglage selon la revendication 2, caractérisé par un capteur de signal de commutation (18) destiné à détecter la vitesse de rotation du moteur hydraulique (7) et à produire un signal de commutation, envoyé au dispositif de commutation (21) pour la commutation, à l'arrêt du moteur hydraulique (7).

4. Dispositif de commande et de réglage selon la revendication 3, caractérisé en ce que le capteur de signal de commutation (18) est raccordé à un commutateur de sens de circulation (14), qui peut être réglé sur deux positions de commutation (marche avant "V" et marche arrière "R") et sur ralenti ("0"), correspondant aux sens de circulation de la pompe hydraulique (1), et qui en cas de sélection du ralenti, transmet le signal de commutation du capteur de signal de commutation (18) au dispositif de commutation (21).

5. Dispositif de commande et de réglage selon la revendication 4, caractérisé en ce qu'un capteur de signal de commande (16) destiné à mesurer la vitesse de rotation du moteur d'entraînement et à produire le signal de commande est raccordé au commutateur de sens de circulation (14), qui dans l'une de ses deux positions de commutation (marche) ayant "V" ou marche arrière "R") transmet le signal de commande du capteur de signal de commande (16) au côté correspondant de la vanne de sens de circulation (20).

6. Dispositif de commande et de réglage selon la revendication 4 ou 5, caractérisé en ce que le commutateur de sens de circulation (14) est associé à une unité de commande (13) électrique et en ce que le signal de commande ainsi que le signal de commutation sont des signaux électriques.

7. Dispositif de commande et de réglage selon la revendication 6, caractérisé en ce que la vanne de sens de circulation (20) peut être actionnée sur chacun des deux côtés par un aimant proportionnel (39 ou 40) commandée par le signal de commande électrique.

8. Dispositif de commande et de réglage selon l'une au moins des revendications 1 à 7, caractérisé en ce que la vanne de sens de circulation (20) présente sur chacun des deux côtés un compartiment de commande (45, 46) qui, en vue de l'alimentation avec la pression de travail régnant dans la conduite de travail (5 ou 6) acheminant la haute pression, en tant que signal de pression de travail, peut être relié à l'une des conduites de travail (5 ou 6), par le dispositif de commutation (21).

9. Dispositif de commande et de réglage selon la revendication 8, caractérisé en ce que le dispositif de commutation (21) est une vanne de distribution à 4/2 voies.

10. Dispositif de commande et de réglage selon la revendication 9, caractérisé en ce que la vanne de distribution à 4/2 voies est réalisée sous la forme d'une vanne de commutation (21) ou d'une vanne réglable en continu.

11. Dispositif de commande et de réglage selon l'une au moins des revendications précédentes, caractérisé en ce que la vanne de sens de circulation (20) est réalisée sous la forme d'une vanne de distribution à 4/3 voies d'étranglement et est maintenue dans une position de repos d'arrêt, par centrage à ressort (34, 35).

12. Dispositif de commande et de réglage selon l'une au moins des revendications précédentes, caractérisé en ce que le dispositif de réglage (19) est un vérin hydraulique (22) avec un piston synchrone (23) centré par ressort (29, 30).

13. Dispositif de commande et de réglage selon la revendication 12, caractérisé en ce que pour le rappel de la vanne de sens de circulation (20) dans la position de repos, son boîtier (28) est relié à la tige (27) du piston synchrone (23).
